# EUROPEAN PATENT SPECIFICATION

(11) **EP 3 153 300 B1**
(45) Date of publication and mention of the grant of the patent: **12.09.2018**
(21) Application number: 15188793.2
(22) Date of filing: 07.10.2015
(51) Int. Cl.: B29C 65/08, A24F 23/02, B29L 9/00

(54) **METHOD OF MANUFACTURING A TOBACCO POUCH**
VERFAHREN ZUR HERSTELLUNG EINES TABAKBEUTELS
PROCÉDÉ DE FABRICATION D'UNE BLAGUE À TABAC

(43) Date of publication of application: 12.04.2017
(73) Proprietor: Imperial Tobacco Limited, Bristol BS32LL (GB)
(72) Inventor: Goodall, Chris, West Yorkshire, WF13 3LG (GB); Robinson, Gary, West Yorkshire, WF13 3LG (GB)
(74) Representative: Gulde & Partner

(56) References cited:
- EP-A1- 2 292 520
- EP-A2- 2 216 167
- WO-A1-2008/114133
- WO-A1-2014/209114
- US-A1- 2014 190 638

## Description

The present invention refers to a method of manufacturing a tobacco pouch as well as a tobacco pouch produced by the method.

Tobacco pouches, as known in the art, are often manufactured from a thin material that is folded in a first step and then locally joined in a second step. Latest tobacco pouches may comprise three or even more layers of the thin material in the joining area. The thin material may comprise or consist of a laminate. Usually, there is a printed element embedded between the layers of the laminate to form a certain design.

Exemplary embodiments of such tobacco pouch are described in WO 2015/132104.

It is further known in the art to join the folded thin material in an ultrasonic welding process. Ultrasonic welding is a method wherein a workpiece is placed on a lower part of an ultrasonic welding tool, called anvil. Then, highly frequent mechanical vibrations are imposed on the workpiece by welding structures of an upper part of the tool, called sonotrode or horn. Affected by frictional heat, the workpiece is locally melted and the layers of the thin material are locally joined.

In an ultrasonic welding process as described above the temperature of the laminate is increased locally. This leads to local material extent and as a result, the laminate is locally deformed between the anvil and the sonotrode. It recently turned out that if three or more layers of such laminate are welded, the material deformation and frictional forces that occur simultaneously may lead to impairment of the thin layers of the laminate. As a result, paint of the printed element may escape the laminate. Further, impairment of the workpiece as such or impaired appearance of the resulting welding seam is caused by impairment of the thin layers of the laminate.

An additional problem is related to the ultrasonic welding tool itself. As the mechanical vibrations are imposed on the workpiece through the welding structures of the tool the welding structures tend to collapse due to mechanical tension. The defect pre-dominantly occurs in the area, where welding structures of the ultrasonic welding tool are connected to a welding surface thereof.

Exemplary prior art embodiments of methods of manufacturing of packages like e.g. tobacco pouches are disclosed in EP 2 216 167 A2, EP 2 292 520 A1, WO 2014/209114 A1 and WO 2008/114133 A1.

It is an objective of the invention to provide an alternative method of manufacturing a tobacco pouch to overcome the problems described above.

The invention refers to a method of manufacturing a tobacco pouch, wherein a workpiece, comprising at least three layers of a thin material, is placed between a welding surface of an anvil and a welding surface of a sonotrode of an ultrasonic welding tool and wherein the layers are then sectionally joined in an ultrasonic welding process, wherein the respective welding surface of at least one of said sonotrode and / or said anvil comprises a plurality of welding structures that are spaced at least in a first direction and in a second direction to form a pattern wherein each of said welding structures comprises a plateau and at least one descending side surface, wherein the descending side surface is initiated by an edge of the plateau. According to the invention opposing side surfaces of at least two adjacent welding structures are interconnected at a bottom part of the opposing side surfaces.

The welding structures as structural elements of the ultrasonic welding tool are used to transmit welding energy to the workpiece. The workpiece is therefore mechanically contacted by a plateau of the welding structure and the welding energy is introduced to the workpiece by mechanical vibrations to create a welding seam. Accordingly, through a number of welding structures larger welding seams can be created. Geometry of the welding seam is determined by the pattern the welding structures are arranged in. The plateau of the welding structure is spaced apart from the welding surface of the respective sonotrode or anvil of the ultrasonic welding tool used in the method of the invention. Therefore, the side surface of the welding structure ranges from an edge that limits the plateau, basically downwards in the direction of the welding surface. There are at least two adjacent welding structures featuring such a side surface. These side surfaces are observing each other which, in other words, means that they are located opposite of each other. It is important to the invention that these opposing side surfaces are connected at a bottom part. In other words, as the side surfaces extend from the edge of the plateau basically downwards in the direction of the body of the welding tool, there is a structural area that interconnects opposing side surfaces of adjacent welding structures and, thus, limits a side surface in the direction towards the adjacent welding structure. This way, a cavity is formed between the two adjacent welding structures, defined by the two side surfaces and the bottom part. The bottom part of a side surface preferably denotes the part of the side surface which is located most distal from the edge of the plateau of the respective welding structure and/or which is located at a position with the greatest vertical height-distance from the respective plateau and which is connected to the bottom part of the opposing side surface of the adjacent welding structure.

It is an advantage of the method of the invention that in case of expanding material of the workpiece the applied ultrasonic welding tool comprises a cavity so as to accommodate shifting material during the ultrasonic welding process. Especially in case of workpieces comprising three or more layers of a thin material this material rapidly requires a high volume of additional space as it is shifted and locally folded by limiting structures of the ultrasonic welding tool. A shift of material may result from local material extent due to local heating. A shift of material may further result from mechanical deformation or dislocation of the workpiece, for example due to mechanical vibrations. The cavity offers a possibility for the material of spreading out in said cavity. Thus, mechanical stress imposed on the thin material of the workpiece is significantly reduced. The quality and cost effectiveness of the tobacco pouches manufactured by the method of the invention are significantly improved. It is an additional advantage of the method of the invention that the welding structures of the ultrasonic welding tool are not harmed by mechanical tension anymore. Research has revealed that reducing notch effect in an area between the welding structures effectively compensates for the impact of high mechanical tension. The area is located where the side surfaces of the adjacent welding structures are connected at the bottom part. During the ultrasonic welding process mechanical tension is imposed on the ultrasonic welding tool. This tension can smoothly be guided underneath the bottom part. Thus, the ultrasonic welding tool used in the method of the invention is more resistant against mechanical tension. As a consequence, process quality, as well as process security and process cost effectiveness are improved.

For example, an ultrasonic welding tool as disclosed in US 2014 / 0190638 A1 can be used in the method of the invention.

In a preferred embodiment of the method of the invention the bottom part is smoothed so as to avoid sharp structures. The term sharp structure herein refers to a structure that is for example crack-like or notch-like. Also a structure comprising ridges or peaks is concerned. For example the bottom part may comprise a radius or a smoothed valley to avoid sharp structures. Preferably the side surfaces extend from the edge of the plateau to the bottom part and transition into the bottom part in a curved shape with continuously decreasing inclination.

Advantageously the material of the tobacco pouch is prevented from damage even if the thin material contacts the surface of the cavity. The thin material is neither buckled nor penetrated by the surface of the cavity as it spreads out in the cavity. The quality of the method and the tobacco pouch produced by it are further improved.

In a further preferred embodiment of the method of the invention the opposing side surfaces and the bottom part form an at least sectionally V-like or U-like structure. The term U- like or V-like structure herein refers to structures that are at least sectionally similar to a U or a V in a cross-sectional view. In other words, in the cross-sectional view the opposing side surfaces and the bottom part form a symmetric cavity. To fulfill the invention it is at least necessary to provide two opposing side surfaces that are descending and formed similar to the legs of the U or the V along with a bottom part that connects the two legs, formed similar to a lower section of the U or the V. This does not limit the invention to legs that form a straight line. It is also preferred that the legs comprise a curved shape.

Advantageously this reduces the costs of the method as the effort of manufacturing the ultrasonic welding tool is reduced. Further advantageously it is easier to calculate and simulate thermodynamic conditions close to the cavity due to the symmetric geometry of the cavity.

Some of the following preferred embodiments of the method of the invention refer to quantified process parameters or to quantified parameters of the geometry of the ultrasonic welding tool used in the method. These quantified parameters have been found by extensive research. This research has revealed that the respective parameters assure a high quality welding seam while maintaining high durability of the ultrasonic welding tool in combination with a reduction of production time.

In a further preferred embodiment of the method of the invention a ratio of a total area of the respective welding surface to a total area of the plateaus of all welding structures of the respective welding surface is 0,15 to 0,35, preferably 0,25.

In a further preferred embodiment of the method of the invention the first direction and the second direction are oriented perpendicular to each other.

Advantageously the effort of manufacturing such a tool is reduced. For instance, a machine tool can be more easily programmed and the ultrasonic welding tool can be more easily scaled. This also reduces the costs of the method of the invention. Further advantageously, the welding seams produced by the method are geometrically well defined and comprise neat and clean looks.

In a further preferred embodiment of the method of the invention the welding structures are located equidistant from each other in the first direction and / or the second direction. The distances between the welding structures may be equal in the first and in the second direction. The distances may also be different in the first direction and in the second direction, but still equidistant within one and the same direction.

Advantageously the effort of manufacturing such a tool is further reduced. This reduces the costs of the method of the invention, too. The above stated advantages are further exploited.

In a further preferred embodiment of the method of the invention the welding structures are periodically arranged in the first direction and / or in the second direction. Preferably a length of the period measures 0,8 mm to 2,5 mm, more preferably 1,65 mm to 1,75 mm and even more preferred 1,7 mm. The term periodical implies that the welding structures and the smoothly-shaped cavities between them are mainly uniform and constantly repeated in uniform intervals as a symmetric pattern.

In a further preferred embodiment of the method of the invention the plateau has a round, circular, oval, polygonal, (e.g. triangular, quadrangular, pentagonal, hexagonal), rectangular, or square shape. Basically all geometrically defined shapes are applicable with respect to the effort of manufacturing the plateaus and to their durability, as well as to ultrasonic welding process requirements.

The above stated shapes were found to assure improved thermodynamic conditions in the area where welding energy is transmitted to the workpiece. Further, these shapes can be manufactured at reduced effort.

In a preferred embodiment of the method of the invention edges of the plateau can be sharp. Advantageously a contact zone to contact the workpiece is precisely defined. In a further preferred embodiment the edges can be deburred, rounded or radiused. This advantageously prevents the workpiece from being damaged. The respective shape of the edge of the plateau can for instance be achieved by polishing, lapping or grinding.

In a further preferred embodiment of the method of the invention the bottom part comprises a supporting plane. This means that the lower limitation of the side surfaces comprises a plane that limits the side surface in the direction of the welding surface. Both of said side surfaces of the different adjacent welding structures are limited by the same plane. It is further important to the invention that both side surfaces are connected to the plane, whereas in a connection area the respective side surface and the plane comprise the same inclination, which is zero. Thus, the cavity formed by the opposing side surfaces and the bottom part features a smooth surface and a planar valley.

Advantageously this enhances an available volume of the cavity and the possibility of accommodating more material of the workpiece in the cavity. An additional advantage is that notch effect is further reduced as mechanical tension can smoothly be guided underneath the supporting plane parallel to the welding surface.

In a further preferred embodiment of the method of the invention a width of the supporting plane measures 0,01 mm to 0,5 mm, preferably 0,05 mm to 0,2 mm, more preferably 0,05 mm to 0,15 mm and even more preferred 0,1 mm. The width of the supporting plane is measured from where a side surface of a welding structure transitions into the supporting plane to where an opposing side surface of an adjacent welding structure transitions into the same supporting plane. In these points or lines inclination is zero.

In a further preferred embodiment of the method of the invention a normal distance from the plateau to the supporting plane measures 0,05 mm to 0,5 mm, preferably 0,2 mm. In other words, a height of the welding structure ranges within the given interval. The height of the welding structure is the shortest distance between a plateau of a welding structure and a supporting plane that side surfaces of the adjacent welding structures transition into.

In a further preferred embodiment of the method of the invention the opposing side surfaces and the bottom part form a U-like structure wherein each of said opposing side surfaces exhibit the shape of a partial inner skin surface of a hollow cylinder, tangentially transitioning into the supporting plane. In other words, as the side surfaces extend from the edge of the respective plateau basically in the direction of the welding surface, they feature a curved shape with decreasing inclination. More precisely, the curve is describable by a radius so that inclination is very high in an area close to the edge and very low close to a lower limitation of the side surface in the direction of the welding surface. At the lower limitation, at the supporting plane, the inclination is zero.

Advantageously a cavity formed by the opposing side surfaces and the bottom part in the above described manner comprises a high volume to accommodate material of the workpiece and a smooth shape. It can be easily manufactured and is resistant to mechanical tension. An ultrasonic welding process can easily be simulated in an area of this cavity. Further, cost effectiveness and process quality of the method of the invention are improved. Analog advantages apply to the tobacco pouches produced by the method of the invention.

In a further preferred embodiment of the method of the invention a corresponding inner diameter of the hollow cylinder measures 0,2 mm to 3 mm, preferably 1 mm. This means that the shape of the side surface of the welding structure can be described by a radius that is half the inner diameter of the hollow cylinder.

In the method of the invention, preferably all side surfaces of the welding structures of the respective welding surface that are opposed to a side surface of an adjacent welding structure are interconnected to the opposing side surface at a bottom part and form a U-like structure therewith, wherein each of said opposing side surfaces exhibit the shape of a partial inner skin surface of a hollow cylinder, tangentially transitioning into a supporting plane.

The above stated advantages apply to a wider area of the welding surface. Bigger welding seams comprising a high quality can be realized.

In the method of the invention the thin material has preferably a thickness of 300 µm or less, more preferably of 250 µm to 10 µm. The thin material may comprise or consist of a laminate. The laminate can be composed of at least an inner, an outer layer and a printed element arranged between the outer and inner layer. Exemplary embodiments of laminates suitable for use in the manufacture of a tobacco pouch with the method of the invention are disclosed in the international patent application with the application no. PCT/EP2015/065324, and in the European patent application with the application no. EP 15 16 35 63.8.

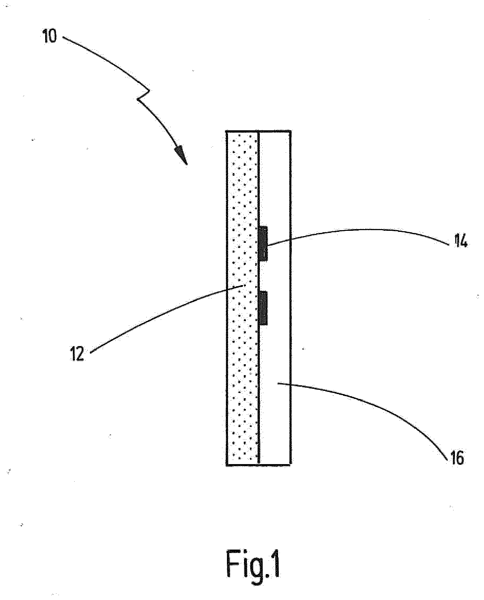

Preferably the structure of the laminate is equal to the example illustrated in Figure 1. Preferably the material thickness of the single layers of the laminate ranges from 6 µm to 110 µm and the thickness of the laminate as one ranges from 60µm to 150 µm, more preferably from 80 µm to 120 µm. Preferred materials are polyethylene (PE), metallized polyethylene terephthalate (MPET), polypropylene (PP) and cast polypropylene (CPP). In a preferred embodiment the inner layer and/or the outer layer are transparent or opaque. In another preferred embodiment the laminate is composed of an inner layer, optionally a middle layer, an outer layer and a printed element. Preferably the outer layer is transparent and the middle layer and the inner layer are opaque. Preferably the printed element is printed on the middle layer or the outer layer. A person skilled in the art that can easily arrive at more embodiments simply by varying the number of layers and by assigning transparency or color properties to the layers, as well as by varying the number, colors and designs of printed elements.

It is a big advantage of the method of the invention that workpieces that comprise a high number of thin layers of the thin material can be securely welded. This is also applicable if the thin material itself consists of a variety of thin layers in form of a laminate.

In a further preferred embodiment of the method of the invention a welding frequency applied ranges from 25 kHz to 50 kHz and preferably is at 40 kHz and/or a welding amplitude ranges from 15 µm to 65 µm.

In a further preferred embodiment of the method of the invention a pressure applied to the workpiece through each welding structure ranges from 0,5 bar to 7,5 bar and / or welding time ranges from 200 ms to 1000 ms. Preferably, welding pressure is provided by multiple bore air cylinders, e.g. 20 to 30 bore air cylinders, wherein each bore air cylinder provides 300 N to 500 N force to the anvil or sonotrode. Preferably, welding time is 200 ms to 5000 ms with an additional 20 ms to 500 ms holding time. This holding time is where the energy supply to the ultrasonic welding tool is removed, with the anvil still held onto the sonotrode. Thus, the holding time allows the workpiece to cool whilst still engaged to the anvil by the sonotrode. Here, preferably a water chilled anvil is used to cool the welded seam. The anvil then retracts and the cycle of the ultrasonic welding process repeats.

It is further disclosed an ultrasonic welding tool that is designed to be applied in a method of manufacturing a tobacco pouch according to the invention.

The ultrasonic welding tool comprises at least one sonotrode and at least one anvil, each comprising a welding surface orientable towards a workpiece for welding purposes, wherein the respective welding surface of at least one of said sonotrode and / or said anvil comprises a plurality of welding structures that are spaced in a first direction and in a second direction to form a pattern wherein each of said welding structures comprises a plateau and at least one descending side surface, wherein the descending side surface is initiated by an edge of the plateau.

According to the invention, opposing side surfaces of at least two adjacent welding structures are interconnected at a bottom part. It is important to the invention that these opposing side surfaces are connected at a bottom part. In other words, as the side surfaces extend from the edge of the plateau basically downwards in the direction of the body of the welding tool, there is a structural area that interconnects opposing side surfaces of adjacent welding structures and, thus, limits a side surface in the direction towards the adjacent welding structure. This way, a cavity is formed between the two adjacent welding structures, defined by the two side surfaces and the bottom part. The bottom part of a side surface preferably denotes the part of the side surface which is located most distal from the edge of the plateau of the respective welding structure and/or which is located at a position with the greatest vertical height-distance from the respective plateau and which is connected to the bottom part of the opposing side surface of the adjacent welding structure.

The welding structures are structural elements of the ultrasonic welding tool disclosed herein. The welding structures are capable of mechanically contacting a workpiece and transmitting welding energy to it in form of mechanical vibrations. The plateau of the welding structure is spaced apart from the welding surface of the respective sonotrode or anvil of the ultrasonic welding tool. Therefore, the side surface of the welding structure ranges from an edge that limits the plateau, basically downwards in the direction of the welding surface. There are at least two adjacent welding structures featuring such a side surface. These side surfaces are observing each other. In other words, the side surfaces are located opposite of each other. It is important to the invention that these opposing side surfaces are connected at a bottom part. In other words, as the side surfaces extend from the edge of the plateau basically downwards in the direction of the welding surface there is a structural area that interconnects them and limits them in the direction of the welding surface. This way, a cavity is formed between the two adjacent welding structures, defined by the two side surfaces and the bottom part.

It is an advantage of the ultrasonic welding tool disclosed herein that it is very well applicable in a method of manufacturing a tobacco pouch according to the invention. In case of expanding material of the workpiece the applied ultrasonic welding tool comprises the cavity so as to accommodate shifting material during the ultrasonic welding process. The cavity offers a possibility for the material of spreading out in said cavity. Thus, the tool disclosed herein significantly reduces mechanical stress imposed on the thin material of the workpiece during an ultrasonic welding process. The quality and cost effectiveness of the tobacco pouches manufactured using the tool disclosed herein can be significantly improved. It is an additional advantage of the ultrasonic welding tool disclosed herein that the welding structures of the ultrasonic welding tool are not harmed by mechanical tension anymore. Research has revealed that reducing notch effect in an area between the welding structures effectively compensates for the impact of high mechanical tension. The area is located where the side surfaces are connected at the bottom part. During the ultrasonic welding process mechanical tension is imposed on the ultrasonic welding tool. This tension can smoothly be guided underneath the bottom part of the tool disclosed herein. As a consequence, quality, security and cost effectiveness of the tool disclosed herein are improved.

In a preferred embodiment of the ultrasonic welding tool disclosed herein the bottom part is smoothed so as to avoid sharp structures. The term sharp structure herein refers to a structure that is for example crack-like or notch-like. For example, the term sharp structure also refers to a structure comprising a ridge or a peak. For example the bottom part may comprise a radius or a smoothed valley to avoid sharp structures. Preferably the side surfaces extend from the edge of the plateau to the bottom part and transition into the bottom part in a curved shape with continuously decreasing inclination.

Advantageously, the thin material of a tobacco pouch manufactured with the tool disclosed herein is prevented from damage even if the thin material contacts the surface of the cavity. The thin material is neither buckled nor penetrated by the surface of the cavity as it spreads out in the cavity due to thermal or mechanical influences. The quality of the tool disclosed herein and the tobacco pouch produced by it are further improved.

In a further preferred embodiment of the ultrasonic welding tool disclosed herein the opposing side surfaces and the bottom part form an at least sectionally V-like or U-like structure. The term U- like or V-like structure herein refers to a structure that is at least sectionally similar to a U or a V in a cross-sectional view. In other words, in the cross-sectional view the opposing side surfaces and the bottom part form a symmetric cavity. To fulfill the invention it is at least necessary to provide two opposing side surfaces that are descending and are similar to the legs of the U or the V along with a bottom part that connects the two legs and is similar to a lower section of the U or the V. This does not limit the invention to legs that form a straight line. It is also preferred that the legs comprise a curved shape.

Advantageously this reduces the effort of manufacturing the ultrasonic welding tool. Further advantageously thermodynamic behavior of the tool is easier to be calculated and simulated close to the cavity due to the symmetric geometry of the cavity.

Some of the following preferred embodiments of the tool disclosed herein refer to quantified process parameters or to quantified parameters of the geometry of the ultrasonic welding tool. These quantified parameters have been found by extensive research. This research has revealed that the respective parameters assure a high quality welding seam manufactured by the tool disclosed herein and maintaining high durability of the ultrasonic welding tool.

In a further preferred embodiment of the tool disclosed herein a ratio of a total area of the respective welding surface to a total area of the plateaus of all welding structures of the respective welding surface is 0,15 to 0,35, preferably 0,25.

Research has revealed that damage to the workpiece surface can be prevented most effectively this way due to advantageous thermodynamic conditions in combination with sufficient capacity of the cavity between the adjacent welding structures.

In a further preferred embodiment of the tool disclosed herein the first direction and the second direction are oriented perpendicular to each other.

Advantageously the effort of manufacturing such a tool is reduced. For instance, a machine tool can be more easily programmed and the ultrasonic welding tool can be more easily scaled. Further advantageously, the welding seams produced by the tool are geometrically well defined and comprise neat and clean looks.

In a further preferred embodiment of the tool disclosed herein the welding structures are located equidistant from each other in the first direction and / or the second direction. The distances between the welding structures may be equal in the first direction and in the second direction. The distances may also be different in the first and in the second direction, but still equidistant within one and the same direction.

Advantageously the effort of manufacturing such a tool is further reduced. The above stated advantages referring to the welding seams are further exploited.

In a further preferred embodiment of the tool disclosed herein the welding structures are periodically arranged in the first direction and / or in the second direction. Preferably a length of the period measures 0,8 mm to 2,5 mm, more preferably 1,65 mm to 1,75 mm and even more preferably 1,7 mm. The term periodical implies that the welding structures and the smoothly-shaped cavities between them are mainly uniform and constantly repeated in uniform intervals as a symmetric pattern.

In a further preferred embodiment of the tool disclosed herein the plateau has a round, circular, oval, polygonal, (e.g. triangular, quadrangular, pentagonal, hexagonal), rectangular, or square shape. Basically all geometrically defined shapes are applicable with respect to the effort of manufacturing the plateaus and to their durability, as well as to ultrasonic welding process requirements.

The above stated shapes were found to assure improved thermodynamic conditions in an area where welding energy can be transmitted to the workpiece. Further, these shapes can be manufactured at reduced effort.

In a preferred embodiment of the tool disclosed herein edges of the plateau can be sharp. Advantageously a contact zone for the workpiece is precisely defined this way. In a further preferred embodiment the edges can be deburred, rounded or radiused. This advantageously prevents the workpiece from being damaged. The respective shapes of the edges of a plateau can for instance be achieved by polishing, lapping or grinding.

In a further preferred embodiment of the tool disclosed herein the bottom part comprises a supporting plane. This means that the lower limitation of the side surfaces comprises a plane that limits the side surface in the direction of the welding surface. Both of said side surfaces of the different adjacent welding structures are limited by the same plane. It is further important that both side surfaces are connected to the plane, whereas in a connection area the respective side surface and the plane comprise the same inclination, which is zero. Thus, the cavity formed by the opposing side surfaces and the bottom part features a smooth surface and a planar valley.

Advantageously this enhances an available volume of the cavity and the possibility of accommodating more material of the workpiece in the cavity. An additional advantage is that notch effect is further reduced as mechanical tension can smoothly be guided underneath the supporting plane parallel to the welding surface.

In a further preferred embodiment of the tool disclosed herein a width of the supporting plane measures 0,01 mm to 0,5 mm, preferably 0,05 mm to 0,2 mm, more preferably 0,05 mm to 0,15 mm and even more preferred 0,1 mm. The width of the supporting plane is measured from where a side surface of a welding structure transitions into the supporting plane to where an opposing side surface of an adjacent welding structure transitions into the same supporting plane. In these points or lines inclination is zero.

In a further preferred embodiment of the tool disclosed herein a normal distance from the plateau to the supporting plane measures 0,05 mm to 0,5 mm, preferably 0,2 mm. In other words a height of the welding structure ranges within the given interval. The height of the welding structure is the shortest distance between a plateau of a welding structure and the supporting plane the side surfaces of the adjacent welding structures transition into.

In a further preferred embodiment of the tool disclosed herein the opposing side surfaces and the bottom part form a U-like structure wherein each of said opposing side surfaces exhibit the shape of a partial inner skin surface of a hollow cylinder, tangentially transitioning into the supporting plane. In other words, as the side surfaces extend from the edge of the respective plateau basically in the direction of the welding surface, feature a curved shape with decreasing inclination. More precisely, the curve is describable by a radius so that inclination is very high in an area close to the edge and very low close to a lower limitation of the side surface in the direction of the welding surface. At the lower limitation, at the supporting plane, the inclination is zero.

Advantageously a cavity formed by the opposing side surfaces and the bottom part in the above described manner comprises a high volume to accommodate material of the workpiece. It further comprises a smoothed shape and can be easily manufactured. It is further resistant to mechanical tension. An ultrasonic welding process can easily be simulated in an area of this cavity. Further, cost effectiveness and quality of the tool disclosed herein are improved. The same advantages apply to the tobacco pouches produces by the tool disclosed herein.

In a further preferred embodiment of the tool disclosed herein a corresponding inner diameter of the hollow cylinder measures 0,2 mm to 3 mm, preferably 1 mm. This means that the shape of the side surface of a welding structure can be described by a radius that is half the inner diameter of the hollow cylinder.

In a further preferred embodiment of the tool disclosed herein all side surfaces of the welding structures of the respective welding surface that are opposed to a side surface of an adjacent welding structure are interconnected to the opposing side surface at a bottom part and form a U-like structure therewith wherein each of said opposing side surfaces exhibit the shape of a partial inner skin surface of a hollow cylinder, tangentially transitioning into a supporting plane.

Advantageously bigger welding seams comprising a high quality as stated above can be realized with such a tool. The above stated advantages now apply at an even higher scale. Preferably the ultrasonic welding tool disclosed herein is made of steel, more preferably of hardened tool steel or stainless steel and even more preferably of stainless steel.

In a preferred embodiment of the ultrasonic welding tool disclosed herein all side surfaces of each welding structure, except at an outer periphery of said sonotrode and / or anvil, are opposed by a side surface of a respective adjacent welding structure. This means, that except at an outer rim of the sonotrode or anvil the smoothly-shaped cavity with the planar valley is present between all adjacent welding structures formed by the respective side surfaces and bottom parts.

In this embodiment a ratio of the total welding surface of an anvil or sonotrode and an area covered by the plateaus, which is important for the size of the welding seam producible in one cycle, is advantageously close to its optimum.

In a further preferred embodiment of the ultrasonic welding tool disclosed herein all side surfaces that are opposed to a side surface of an adjacent welding structure can be interconnected at the bottom part by a single common supporting plane.

This means that such a common plane can be manufactured at a reduced number of manufacturing cycles, for instance in a milling process. The effort of manufacturing the tool disclosed herein is reduced thereby.

The invention further refers to a tobacco pouch, manufactured by a method according to the invention.

In a preferred embodiment of the tobacco pouch of the invention a workpiece, the tobacco pouch is manufactured from in the method of the invention, comprises a thin material comprising a laminate as shown in Figure 1. Further preferred, the laminate may be specified as described above referring to the method of the invention.

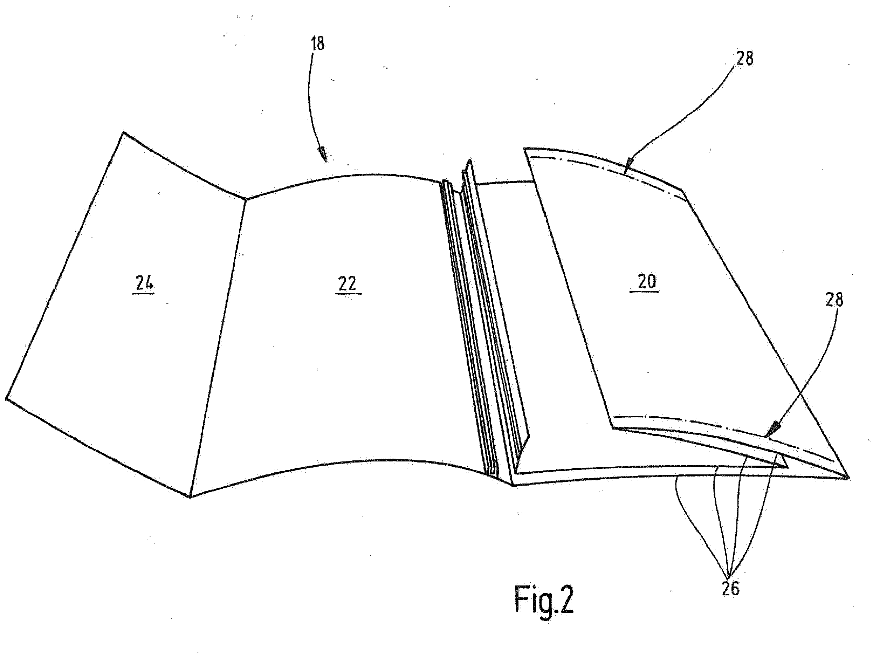

In a further preferred embodiment of the tobacco pouch of the invention the thin material of the workpiece comprises three or more layers of the thin material. Further preferred, the thin material is folded according to a folding scheme described in Figure 2. The three or more layers of the thin material can be produced by the folding scheme.

Advantageously the tobacco pouch produced by the method of the invention is of high quality and does not comprise any damages in the area of the welding seam. Further the tobacco pouch is highly flexible as it may consist of even more than three layers of the thin material. Further the tobacco pouch can be produced at low costs.

Further preferred embodiments of the invention result from an advantageous combination of two or more disclosed features and from the depending claims. Preferred embodiments of the invention are further illustrated in the following figures:
- Figure 1: exemplarily illustrates a schematic layer-structure of a laminate as a thin material for a tobacco pouch according to the state of the art;
- Figure 2: exemplarily illustrates a folding scheme of a thin material to produce a tobacco pouch;
- Figure 3: exemplarily illustrates a schematic view of a preferred embodiment of an ultrasonic welding tool, which is not part of the invention;
- Figure 4: exemplarily illustrates a schematic close-up view of a preferred embodiment of welding structures of the ultrasonic welding tool referring to detail C of Figure 3.
- Figure 5: exemplarily illustrates a schematic close up view of a preferred embodiment of welding structures of the ultrasonic welding tool referring to detail A and detail B of Figure 3.

Used reference signs are valid for all figures.

Figure 1 exemplarily illustrates a schematic layer-structure of a laminate as a thin material for a tobacco pouch. The laminate 10 shown in Figure 1 comprises three layers: an inner layer 12, a printed element 14 and an outer layer 16. The person skilled in the art is aware that a laminate is a tight bond of material achieved by e.g. physical, thermal or chemical bonding mechanisms on the molecular or atomic level. For instance, the inner layer 12 can be opaque and the outer layer 16 can be transparent. Further, just as an example the printed element 14 can be a black line or represent any other design. The inner layer 12 and the outer layer 16 may for example be made of polyethylene. Typically, the layers of the laminate 10 are rather thin, preferably the laminate has a thickness of 300 µm or less, more preferably of 250 µm to 10 µm. For example, the inner layer 12 can comprise a material thickness of 80 µm and the outer layer 16 can comprise a material thickness of 25 µm, in order to let the printed element 14 appear clearly.

Figure 2 exemplarily illustrates a folding scheme of a thin material to produce a tobacco pouch 18. A laminate 26, for example according to the laminate 10 described in Figure 1, is folded in multiple times. Thus, it forms different structural elements of the tobacco pouch 18. The structural elements comprise a front panel 20, a first wrapping flap 22 and a second wrapping flap 24. As illustrated in Figure 2, it occurs that the laminate 26 is folded in a way as to generate a sandwich structure that may comprise three, four or even more layers of laminate 26 stacked on each other. Such sandwich structures are joined in an ultrasonic welding process in the method of the invention by an ultrasonic welding tool. In this case, welding seams 28 are generated, that penetrate the number of layers of the laminate 26.

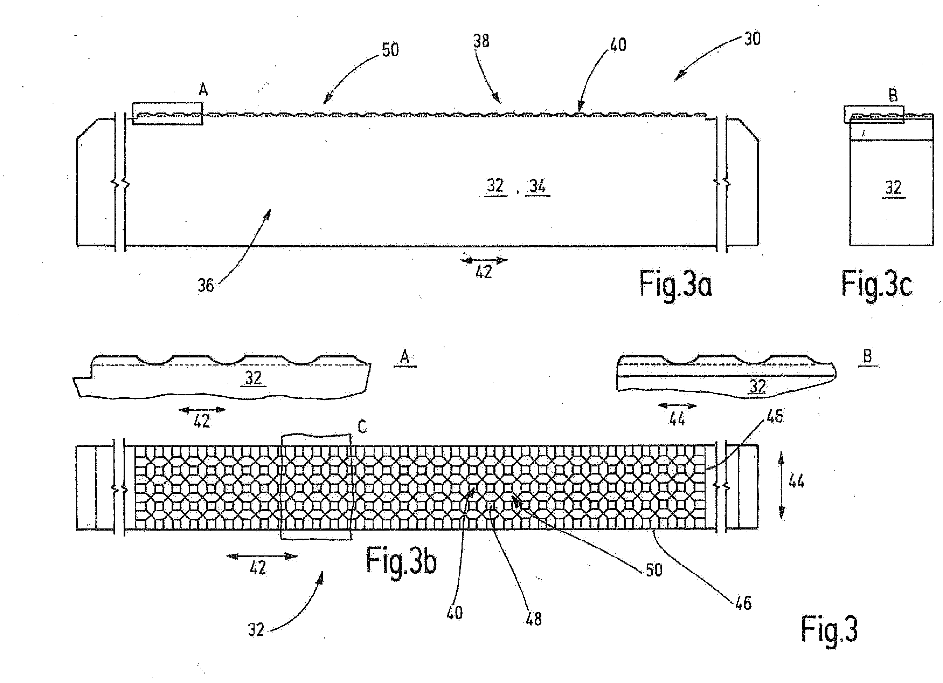

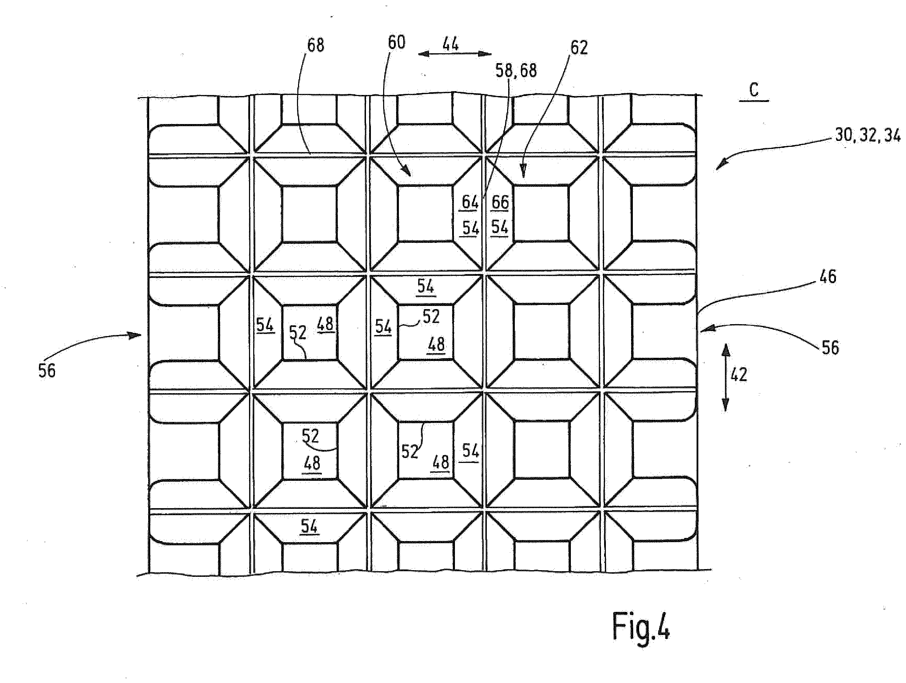

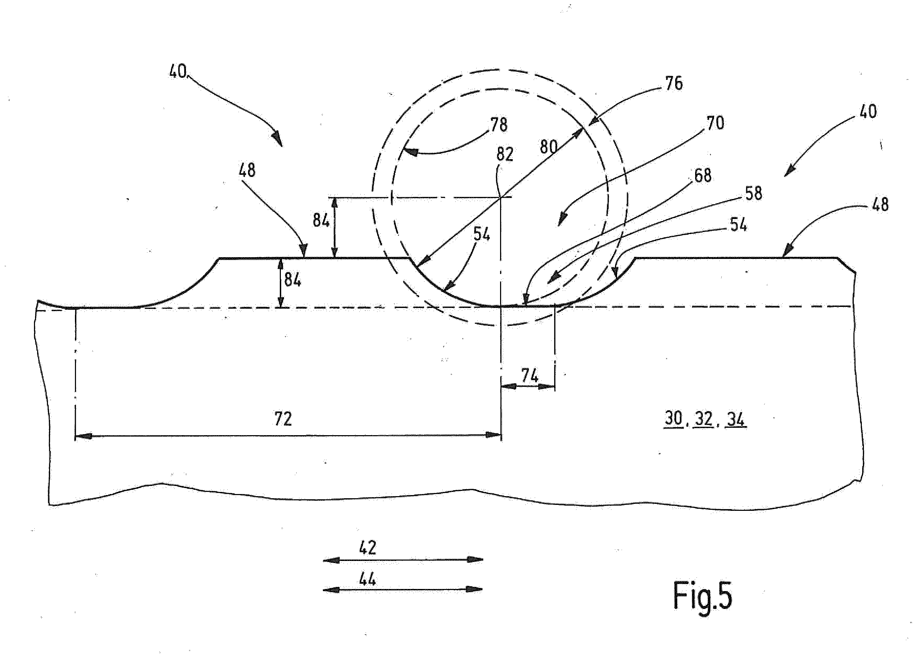

Figure 3 shows a preferred embodiment of an ultrasonic welding tool 30. The ultrasonic welding tool comprises an anvil 32 and a sonotrode 34. As the anvil 32 and the sonotrode 34 may be designed equally the following description refers only to the anvil 32. Of course, only the anvil 32 or only the sonotrode 34 may be designed as disclosed herein so that there may respectively be a conventional anvil or sonotrode in an ultrasonic welding tool 30. Such conventional anvils or sonotrodes are known in the art. A conventional anvil may for example comprise a flat or in other words planar welding surface. A conventional sonotrode may for example comprise peak-like welding structures. The anvil 32 is illustrated from different points of view. Figure 3a shows the anvil 32 from a first side. The anvil 32 comprises a cuboid-like main body 36 with a welding surface 38 orientable towards a workpiece which is not illustrated here. The welding surface 38 comprises a number of welding structures 40 that can be seen from a point of view on top of the anvil 32 in Figure 3b. The welding structures 40 are spaced in a first direction 42 and in a second direction 44 that are running parallel to ridges 46 of the cuboid-like main body 36. Each of the welding structures 40 comprises a rectangular plateau 48. The welding structures 40 are described further in Figures 4 and 5. Figure 3 further illustrates that the welding structures 40 are located equidistant from each other in the first direction 42 and in the second direction 44 and thus form a symmetric pattern 50. The distances of the welding structures 40 in the first and second direction 42, 44 are the same. Figure 3c illustrates the anvil 32 from a second side. Details A, B and C illustrate the welding structures 40 in close-up views further described in Figures 4 and 5. In this embodiment a ratio of a total area of the welding surface 38 of said anvil 32, respectively the sonotrode 34, to a total area of the plateaus 48 of the welding structures 40 of the respective anvil 32 or sonotrode 34 is 1:4 (0,25). This means that 25 % of the welding surface 38 is covered by plateaus 48. Further, in this embodiment the ultrasonic welding tool 30 is manufactured of stainless steel.

Figure 4 shows a top view of the welding structures from Detail C in Figure 3b. The plateaus 48 comprise a square shape in this embodiment. Each edge 52 of a plateau 48 initiates a descending side surface 54. Each of these side surfaces 54, except at an outer periphery 56 of the anvil 32 (respectively the sonotrode 34) is connected to an opposing side surface 54 of an adjacent welding structure at a bottom part 58. For example the welding structure 60 is adjacent to the opposing welding structure 62. The side surface 64 of welding structure 60 is opposing side surface 66 of opposing welding structure 62. The side surfaces 64, 66 are connected at the bottom part 58. The bottom part 58 is a supporting plane 68 in this embodiment. It can be gained from Figure 4 that the supporting plane 68 is in fact interconnecting all side surfaces 54 of all welding structures in this embodiment.

Figure 5 shows the welding structures 40 from Details A and B in Figure 3. It can be seen that the bottom part 58 is smoothed and does not comprise any sharp structures. The opposing side surfaces 54 and the bottom part 58 form a U-like structure 70. The U-like structure 70 embodies a cavity to accommodate material of a not illustrated workpiece. The bottom part 58 comprises a supporting plane 68. A width 74 of the supporting plane 68 measures 0,1 mm in this embodiment. It can further be seen that the side surfaces 54 tangentially transitions into the supporting plane 68. Schematically a hollow cylinder 76 can be seen that comprises an inner skin surface 78. The side surfaces 54 comprise the shape of a partial inner skin surface 78 of the hollow cylinder 76. Here, this is only illustrated for the left of the side surfaces 54. The partial inner skin surface 78 of the hollow cylinder 76 tangentially transitions into the supporting plane 68. Furthermore the welding structures 40 are arranged periodically in the first and second direction 42, 44 in this embodiment comprising a length of the period 72 of 1,7 mm. The period length 72 is measured from one point in the pattern 50 to a next equivalent point in the pattern 50 where a partial inner skin surface 78 of a hollow cylinder 76 tangentially transitions into a supporting plane 68. In this embodiment all side surfaces 54 of the welding structures 40 of the respective welding surface 38 that are opposed to a side surface 54 of an adjacent welding structure 40 are interconnected to the opposing side surface 54 at a bottom part 58 and form a U-like structure 70 therewith. Further, each of said opposing side surfaces 54 exhibit the shape of a partial inner skin surface 78 of a hollow cylinder 76, tangentially transitioning into a supporting plane 68. An inner diameter 80 of the hollow cylinder 76 measures 1 mm in this embodiment. A center point 82 of the hollow cylinder 76 is located in a vertical normal distance 84 above the respective plateau 48 which measures 0,3 mm in this embodiment. A normal distance 84 from a plateau 48 to the supporting plane 68 measures in this embodiment 0,2 mm.

### Reference signs

- 10: laminate
- 12: inner layer
- 14: printed element
- 16: outer layer
- 18: tobacco pouch
- 20: front panel
- 22: first wrapping flap
- 24: second wrapping flap
- 26: laminate
- 28: welding seams
- 30: ultrasonic welding tool
- 32: anvil
- 34: sonotrode
- 36: cuboid-like main body
- 38: welding surface
- 40: welding structure
- 42: first direction
- 44: second direction
- 46: ridges
- 48: plateau
- 50: pattern
- 52: edge
- 54: side surface
- 56: outer periphery
- 58: bottom part
- 60: welding structure
- 62: opposing welding structure
- 64: side surface
- 66: side surface
- 68: supporting plane
- 70: U-like structure
- 72: period
- 74: width
- 76: hollow cylinder
- 78: inner skin surface
- 80: inner diameter
- 82: center point
- 84: normal distance

## Claims

1. Method of manufacturing a tobacco pouch, wherein a workpiece, comprising layers (26) of a thin material, is placed between a welding surface (38) of an anvil (32) and a welding surface (38) of a sonotrode (34) of an ultrasonic welding tool (30) and wherein the layers (26) are then sectionally joined in an ultrasonic welding process, **characterized in that**
said workpiece comprises at least three layers of said thin material
and **in that**
the respective welding surface (38) of at least one of said sonotrode (34) and / or said anvil (32) comprises a plurality of welding structures (40) that are spaced at least in a first direction (42) and in a second direction (44) to form a pattern (50) wherein each of said welding structures (40) comprises a plateau (48) and at least one descending side surface (54), wherein the descending side surface (54) is initiated by an edge (52) of the plateau (48) and wherein opposing side surfaces (54) of at least two adjacent welding structures (40) are interconnected at a bottom part (58) of the opposing side surfaces (54).

2. Method of manufacturing a tobacco pouch according to claim 1, **characterized in that** the bottom part (58) is smoothed so as to avoid sharp structures.

3. Method of manufacturing a tobacco pouch according to claim 1 or 2, **characterized in that** the opposing side surfaces (54) and the bottom part (58) form an at least sectionally V-like or U-like structure (70).

4. Method of manufacturing a tobacco pouch according to one of the claims 1 to 3, **characterized in that** a ratio of a total area of the respective welding surface (38) to a total area of the plateaus (48) of all welding structures (40) of the respective welding surface (38) is 0,15 to 0,35.

5. Method of manufacturing a tobacco pouch according to one of the claims 1 to 4, **characterized in that** the first direction (42) and the second direction (44) are oriented perpendicular to each other.

6. Method of manufacturing a tobacco pouch according to one of the claims 1 to 5, **characterized in that** the welding structures (40) are located equidistant from each other in the first direction (42) and / or the second direction (44).

7. Method of manufacturing a tobacco pouch according to one of the claims 1 to 6, **characterized in that** the welding structures (40) are periodically arranged in the first direction (42) and / or in the second direction (44).

8. Method of manufacturing a tobacco pouch according to one of the claims 1 or 7, **characterized in that** the plateau (48) has a round, circular, oval, polygonal, (e.g. triangular, quadrangular, pentagonal, hexagonal), rectangular, or square shape.

9. Method of manufacturing a tobacco pouch according to one of the claims 1 to 8, **characterized in that** the bottom part (58) comprises a supporting plane (68).

10. Method of manufacturing a tobacco pouch according to claim 9, **characterized in that** a width (74) of the supporting plane (68) measures 0,01 mm to 0,5 mm.

11. Method of manufacturing a tobacco pouch according to claim 9 or 10, **characterized in that** a normal distance (84) from the plateau (48) to the supporting plane (68) measures 0,05 mm to 0,5 mm.

12. Method of manufacturing a tobacco pouch according to one of the claims 9 to 11, **characterized in that** the opposing side surfaces (54) and the bottom part (58) form a U-like structure (70) wherein each of said opposing side surfaces (54) exhibit the shape of a partial inner skin surface (78) of a hollow cylinder (76), tangentially transitioning into the supporting plane (68).

13. Method of manufacturing a tobacco pouch according to claim 12, **characterized in that** a corresponding inner diameter (80) of the hollow cylinder (76) measures 0,2 mm to 3 mm.

14. Method of manufacturing a tobacco pouch according to claim 12 or 13, **characterized in that** all side surfaces (54) of the welding structures (40) of the respective welding surface (38) that are opposed to a side surface (54) of an adjacent welding structure (40) are interconnected to the opposing side surface (54) at a bottom part (58) and form a U-like structure (70) therewith wherein each of said opposing side surfaces (54) exhibit the shape of a partial inner skin surface (78) of a hollow cylinder (76), tangentially transitioning into a supporting plane (68).

15. Method of manufacturing a tobacco pouch according to one of the claims 1 to 14, **characterized in that** the thin material comprises a laminate (18) composed of at least an inner (12), an outer layer (16) and a printed element (14) arranged between the outer (16) and inner layer (12).

16. Method of manufacturing a tobacco pouch according to one of the claims 1 to 15, **characterized in that** a welding frequency applied ranges from 25 kHz to 50 kHz and/or a welding amplitude ranges from 15 µm to 65 µm.

17. Method of manufacturing a tobacco pouch according to one of the claims 1 to 16, **characterized in that** a pressure applied to the workpiece through each welding structure (40) ranges from 0,5 bar to 7,5 bar and / or welding time ranges from 200 ms to 1000 ms.

18. Tobacco pouch, manufactured by a method according to one of the claims 1 to 17.

## Patentansprüche

1. Verfahren zur Herstellung eines Tabakbeutels, wobei ein Werkstück, das Schichten (26) aus einem dünnen Material umfasst, zwischen einer Schweißfläche (38) eines Ambosses (32) und einer Schweißfläche (38) einer Sonotrode (34) eines Ultraschallschweißwerkzeugs (30) angeordnet wird und wobei die Schichten (26) dann abschnittsweise in einem Ultraschallschweißvorgang verbunden werden, **dadurch gekennzeichnet, dass** das Werkstück mindestens drei Schichten aus dem dünnen Material umfasst, und dadurch, dass die jeweilige Schweißfläche (38) der Sonotrode (34) und/oder des Ambosses (32) eine Mehrzahl von Schweißstrukturen (40) umfasst, die zumindest in einer ersten Richtung (42) und in einer zweiten Richtung (44) beabstandet sind und so ein Muster (50) bilden, wobei jede der Schweißstrukturen (40) einen waagerechten Teil (48) und mindestens eine abfallende Seitenfläche (54) umfasst, wobei die abfallende Seitenfläche (54) von einem Rand (52) des waagerechten Teils (48) ausgeht und wobei gegenüberliegende Seitenflächen (54) von mindestens zwei benachbarten Schweißstrukturen (40) an einem Bodenteil (58) der gegenüberliegenden Seitenflächen (54) miteinander verbunden sind.

2. Verfahren zur Herstellung eines Tabakbeutels nach Anspruch 1, **dadurch gekennzeichnet, dass** der Bodenteil (58) geglättet ist, damit scharfe Strukturen vermieden werden.

3. Verfahren zur Herstellung eines Tabakbeutels nach Anspruch 1 oder 2, **dadurch gekennzeichnet, dass** die gegenüberliegenden Seitenflächen (54) und der Bodenteil (58) eine zumindest abschnittsweise V-artige oder U-artige Struktur (70) bilden.

4. Verfahren zur Herstellung eines Tabakbeutels nach einem der Ansprüche 1 bis 3, **dadurch gekennzeichnet, dass** ein Verhältnis einer Gesamtfläche der jeweiligen Schweißfläche (38) zu einer Gesamtfläche der waagerechten Teile (48) aller Schweißstrukturen (40) der jeweiligen Schweißfläche (38) 0,15 bis 0,35 beträgt.

5. Verfahren zur Herstellung eines Tabakbeutels nach einem der Ansprüche 1 bis 4, **dadurch gekennzeichnet, dass** die erste Richtung (42) und die zweite Richtung (44) senkrecht zueinander ausgerichtet sind.

6. Verfahren zur Herstellung eines Tabakbeutels nach einem der Ansprüche 1 bis 5, **dadurch gekennzeichnet, dass** sich die Schweißstrukturen (40) in der ersten Richtung (42) und/oder der zweiten Richtung (44) im gleichen Abstand zueinander befinden.

7. Verfahren zur Herstellung eines Tabakbeutels nach einem der Ansprüche 1 bis 6, **dadurch gekennzeichnet, dass** die Schweißstrukturen (40) in der ersten Richtung (42) und/oder der zweiten Richtung (44) in regelmäßigen Abständen angeordnet sind.

8. Verfahren zur Herstellung eines Tabakbeutels nach einem der Ansprüche 1 oder 7, **dadurch gekennzeichnet, dass** der waagerechte Teil (48) eine runde, kreisförmige, ovale, mehreckige, (z.B. dreieckige, viereckige, fünfeckige, sechseckige), rechteckige oder quadratische Form aufweist.

9. Verfahren zur Herstellung eines Tabakbeutels nach einem der Ansprüche 1 bis 8, **dadurch gekennzeichnet, dass** der Bodenteil (58) eine Trägerebene (68) umfasst.

10. Verfahren zur Herstellung eines Tabakbeutels nach Anspruch 9, **dadurch gekennzeichnet, dass** eine Breite (74) der Trägerebene (68) 0,01 mm bis 0,5 mm beträgt.

11. Verfahren zur Herstellung eines Tabakbeutels nach Anspruch 9 oder 10, **dadurch gekennzeichnet, dass** ein Normalabstand (84) von dem waagerechten Teil (48) zur Trägerebene (68) 0,05 mm bis 0,5 mm beträgt.

12. Verfahren zur Herstellung eines Tabakbeutels nach einem der Ansprüche 9 bis 11, **dadurch gekennzeichnet, dass** die gegenüberliegenden Seitenflächen (54) und der Bodenteil (58) eine U-artige Struktur (70) bilden, wobei jede der gegenüberliegenden Seitenflächen (54) die Form einer Innenseiten-Teilfläche (78) eines Hohlzylinders (76) aufweist, die tangential in die Trägerebene (68) übergeht.

13. Verfahren zur Herstellung eines Tabakbeutels nach Anspruch 12, **dadurch gekennzeichnet, dass** ein entsprechender Innendurchmesser (80) des Hohlzylinders (76) 0,2 mm bis 3 mm beträgt.

14. Verfahren zur Herstellung eines Tabakbeutels nach Anspruch 12 oder 13, **dadurch gekennzeichnet, dass** alle Seitenflächen (54) der Schweißstrukturen (40) der jeweiligen Schweißfläche (38), die einer Seitenfläche (54) einer benachbarten Schweißstruktur (40) gegenüberliegen, mit der gegenüberliegenden Seitenfläche (54) an einem Bodenteil (58) verbunden sind und eine U-artige Struktur (70) damit bilden, wobei jede der gegenüberliegenden Seitenflächen (54) die Form einer Innenseiten-Teilfläche (78) eines Hohlzylinders (76) aufweist, die tangential in eine Trägerebene (68) übergeht.

15. Verfahren zur Herstellung eines Tabakbeutels nach einem der Ansprüche 1 bis 14, **dadurch gekennzeichnet, dass** das dünne Material einen Schichtstoff (18) umfasst, der aus zumindest einer Innen- (12), einer Außenschicht (16) und einem aufgedruckten Element (14), das zwischen der Außen- (16) und Innenschicht (12) angeordnet ist, zusammengesetzt ist.

16. Verfahren zur Herstellung eines Tabakbeutels nach einem der Ansprüche 1 bis 15, **dadurch gekennzeichnet, dass** eine angewendete Schweißfrequenz im Bereich von 25 kHz bis 50 kHz liegt und/oder eine Schweißamplitude im Bereich von 15 µm bis 65 µm liegt.

17. Verfahren zur Herstellung eines Tabakbeutels nach einem der Ansprüche 1 bis 16, **dadurch gekennzeichnet, dass** ein durch jede Schweißstruktur (40) auf das Werkstück ausgeübter Druck im Bereich von 0,5 bar bis 7,5 bar liegt und/oder eine Schweißdauer im Bereich von 200 ms bis 1000 ms liegt.

18. Tabakbeutel, der mit einem Verfahren nach einem der Ansprüche 1 bis 17 hergestellt ist.

## Revendications

1. Procédé de fabrication d'une blague à tabac, où une pièce à usiner, comprenant des couches (26) de matériau mince, est disposée entre une surface de soudage (38) d'une enclume (32) et une surface de soudage (38) d'une sonotrode (34) d'un outil de soudage par ultrasons (30), et où les couches (26) sont ensuite assemblées par sections lors d'un processus de soudage par ultrasons, **caractérisé en ce que** la pièce à usiner comprend au moins trois couches de matériau mince et **en ce que** la surface de soudage respective (38) de la sonotrode (34) et / ou de l'enclume (32) comprend une pluralité de structures de soudage (40) espacées au moins dans une première direction (42) et dans une deuxième direction (44) pour former un motif (50) où chacune des structures de soudage (40) comprend un plateau (48) et au moins une surface latérale descendante (54), la surface latérale descendante (54) partant d'un bord (52) du plateau (48) et les surfaces latérales (54) opposées d'au moins deux structures de soudage (40) adjacentes étant raccordées au niveau d'une partie inférieure (58) des surfaces latérales (54) opposées.

2. Procédé de fabrication d'une blague à tabac selon la revendication 1, **caractérisé en ce que** la partie inférieure (58) est polie de manière à éliminer des structures effilées.

3. Procédé de fabrication d'une blague à tabac selon la revendication 1 ou la revendication 2, **caractérisé en ce que** les surfaces latérales (54) opposées et la partie inférieure (58) forment une structure au moins partiellement en forme de V ou de U (70).

4. Procédé de fabrication d'une blague à tabac selon l'une des revendications 1 à 3, **caractérisé en ce que** le rapport entre une surface totale de la surface de soudage (38) respective et une surface totale des plateaux (48) de toutes les structures de soudage (40) de la surface de soudage (38) respective est compris entre 0,15 et 0,35.

5. Procédé de fabrication d'une blague à tabac selon l'une des revendications 1 à 4, **caractérisé en ce que** la première direction (42) et la deuxième direction (44) sont perpendiculaires l'une à l'autre.

6. Procédé de fabrication d'une blague à tabac selon l'une des revendications 1 à 5, **caractérisé en ce que** les structures de soudage (40) sont situées à équidistance l'une de l'autre dans la première direction (42) et / ou la deuxième direction (44).

7. Procédé de fabrication d'une blague à tabac selon l'une des revendications 1 à 6, **caractérisé en ce que** les structures de soudage (40) sont agencées périodiquement dans la première direction (42) et / ou dans la deuxième direction (44).

8. Procédé de fabrication d'une blague à tabac selon l'une des revendications 1 à 7, **caractérisé en ce que** le plateau (48) a une forme ronde, circulaire, ovale, polygonale, (notamment triangulaire, quadrangulaire, pentagonale, hexagonale), rectangulaire ou carrée.

9. Procédé de fabrication d'une blague à tabac selon l'une des revendications 1 à 8, **caractérisé en ce que** la partie inférieure (58) comprend un plan de support (68).

10. Procédé de fabrication d'une blague à tabac selon la revendication 9, **caractérisé en ce que** la largeur (74) du plan de support (68) est comprise entre 0,01 mm et 0,5 mm.

11. Procédé de fabrication d'une blague à tabac selon la revendication 9 ou la revendication 10, **caractérisé en ce que** la distance normale (84) entre le plateau (48) et le plan de support (68) est comprise entre 0,05 mm et 0,5 mm.

12. Procédé de fabrication d'une blague à tabac selon l'une des revendications 9 à 11, **caractérisé en ce que** les surfaces latérales (54) opposées et la partie inférieure (58) forment une structure en U (70) où chacune des surfaces latérales (54) opposées présente la forme d'une surface partielle de revêtement intérieur (78) d'un cylindre creux (76), tangentielle au plan de support (68).

13. Procédé de fabrication d'une blague à tabac selon la revendication 12, **caractérisé en ce qu'**un diamètre intérieur (80) correspondant du cylindre creux (76) est compris entre 0,2 mm et 3 mm.

14. Procédé de fabrication d'une blague à tabac selon la revendication 12 ou la revendication 13, **caractérisé en ce que** toutes les surfaces latérales (54) des structures de soudage (40) de la surface de soudage respective (38) qui sont opposées à une surface latérale (54) d'une structure de soudage (40) adjacente sont raccordées à la surface latérale (54) opposée au niveau d'une partie inférieure (58) et forment ainsi une structure en U (70) où chacune des surfaces latérales (54) opposées présente la forme d'une surface partielle de revêtement intérieur (78) d'un cylindre creux (76), tangentielle à un plan de support (68).

15. Procédé de fabrication d'une blague à tabac selon l'une des revendications 1 à 14, **caractérisé en ce que** le matériau mince comprend un stratifié (18) composé d'au moins une couche intérieure (12), une couche extérieure (16) et un élément imprimé (14) intercalé entre la couche extérieure (16) et la couche intérieure (12).

16. Procédé de fabrication d'une blague à tabac selon l'une des revendications 1 à 15, **caractérisé en ce qu'**une fréquence de soudage appliquée est comprise entre 25 kHz et 50 kHz et/ou une amplitude de soudage est comprise entre 15 µm et 65 µm .

17. Procédé de fabrication d'une blague à tabac selon l'une des revendications 1 à 16, **caractérisé en ce qu'**une pression appliquée sur la pièce à usiner par chaque structure de soudage (40) est comprise entre 0,5 bar et 7,5 bar et / ou un temps de soudage est compris entre 200 ms et 1000 ms.

18. Blague à tabac, fabriquée conformément à un procédé selon l'une des revendications 1 à 17.
